(19) Europäisches Patentamt
European Patent Office
Office européen des brevets

(11) Publication number: 0 392 710 A1

# (12) EUROPEAN PATENT APPLICATION

(21) Application number: 90303413.0

(22) Date of filing: 30.03.90

(51) Int. Cl.5: C08G 18/32, C08G 18/66, C08G 18/50, C08G 18/78

(30) Priority: 14.04.89 GB 8908493

(43) Date of publication of application: 17.10.90 Bulletin 90/42

(84) Designated Contracting States: AT BE CH DE DK ES FR GB GR IT LI NL SE

(71) Applicant: IMPERIAL CHEMICAL INDUSTRIES PLC
Imperial Chemical House, Millbank
London SW1P 3JF(GB)

(72) Inventor: Cassidy, Edward Francis
Chalet LIDERITE "Le Brugeland"
B-6810 Chiny (Izel)(BE)
Inventor: Gillis, Herbert Russell
Unit 4, 8230 Crestview Drive
Sterling Heights, Michigan 48077(US)

(74) Representative: Baken, Philippus Johannes L. H. et al
Imperial Chemical Industries PLC Legal Department: Patents P.O. Box 6 Bessemer Road
Welwyn Garden City Herts. AL7 1HD(GB)

## (54) Elastomers.

(57) A polyurea elastomer comprising the reaction product of an organic polyisocyanate, an aromatic amine-terminated chain extender, an isocyanate-reactive amine having a molecular weight of at least 200 and at least two isocyanate-reactive groups at least 50 % of which are aliphatically bound primary and/or secondary amino groups and an aldehyde or ketone in an amount equivalent to at least 5 % of the aliphatic amino group content of the isocyanate-reactive amine.

EP 0 392 710 A1

This invention relates to elastomers, to methods for their preparation and to reaction systems useful in said methods.

The manufacture of isocyanate-based cellular or non-cellular elastomers is well established, one important production technique being that known as reaction injection moulding (RIM) whereby two highly reactive liquid streams are impingement mixed and rapidly injected into a mould cavity. The two streams generally comprise a polyisocyanate or derivative thereof, often known as the "A" component, and an isocyanate-reactive stream, known as the "B" component.

Recent years have seen the intensive development of polyurea elastomer systems wherein the isocyanate-reactive component contains polyamines, commonly a combination of a polyether polyamine and an aromatic polyamine chain extender. Reaction injection moulded polyurea elastomers possess many advantages in processing and physical properties over the corresponding polyurethane and polyurethane-urea elastomers prepared from polyol containing formulations. However, because of the high reactivity of the polyether polyamines, the flow and mould-filling characteristics of polyurea systems often leave much to be desired.

In our EP-A-0284253, it has been disclosed that isocyanate-reactive components based on imino-functional compounds provide a much more desirable reaction profile than is provided by aliphatic amine terminated polyether resins. The imino-functional compounds described include aldimines and ketimines obtained by reacting low or high molecular weight aliphatic polyamines with aldehydes or ketones. The low molecular weight polyimines are used as chain extenders optionally in conjunction with aromatic polyamine chain extenders and the high molecular weight polyimines as softblock components optionally with supplemental high molecular weight isocyanate-reactive materials such as polyether polyamines.

It has now been found that high quality polyurea elastomers possessing excellent processing characteristics can be prepared from reaction mixtures containing polyamines and aldehydes or ketones.

Thus, according to the invention, there is provided a polyurea elastomer comprising the reaction product of an organic polyisocyanate, an aromatic amine-terminated chain extender, an isocyanate-reactive amine having a molecular weight of at least 200 and at least two isocyanate-reactive groups at least 50 % of which are aliphatically bound primary and/or secondary amino groups and an aldehyde or ketone in an amount equivalent to at least 5 % of the aliphatic amino group content of the isocyanate-reactive amine.

Organic polyisocyanates which may be used in the preparation of the polyurea elastomers of the invention include aliphatic, cycloaliphatic and araliphatic polyisocyanates, for example hexamethylene diisocyanate, isophorone diisocyanate, cyclohexane-1,4-diisocyanate, dicyclohexylmethane-4,4′-diisocyanate and p-xylylene diisocyanate. The preferred polyisocyanates, however, are the aromatic polyisocyanates, for example phenylene diisocyanates, tolylene diisocyanates, 1,5-naphthylene diisocyanate and especially the available MDI isomers, that is to say 4,4′-diphenylmethane diisocyanate, 2,4′-diphenylmethane diisocyanate and mixtures thereof.

Whilst diisocyanates are the preferred polyisocyanates for use in the preparation of the elastomers, mixtures of diisocyanates with minor proportions of higher functionality polyisocyanates may be used if desired. Such mixtures include polymethylene polyphenyl polyisocyanates (crude MDI). Mention may also be made of polyisocyanates (especially MDI) which have been modified by the introduction of urethane, allophanate, urea, biuret, carbodiimide, uretonimine or isocyanurate residues.

As examples of especially useful modified polyisocyanates, there may be mentioned polyisocyanates comprising polyisocyanate species having a molecular weight greater than 600 of the general formula :

$T_m(R)_n$ (1)

wherein T represents a chain of more than 30 atoms, m represents an integer of at least 1, R represents an isocyanate group containing residue and n is an integer of at least 2, at least one of the residues represented by R containing at least 2 isocyanate groups separated one from another by a chain of from 2 to 30 atoms and the sum of the residues represented by R constituting less than 50 % of the total molecule on a weight basis.

References herein to the number of atoms present in a chain indicate the number of atoms present in the backbone of a chain but not hydrogen atoms or other substituents attached to backbone atoms. Thus, in a poly(propylene oxide) chain, the carbon and oxygen atoms constituting the backbone of the chain are counted but not the attached hydrogen atoms or the atoms present in the methyl substituents.

As examples of the types of chains represented by T in the polyisocyanates of Formula 1, there may be mentioned polyesters, polyesteramides, polycarbonates, polythioethers, polyacetals, polyolefins, polysiloxanes and, especially, polyethers.

The polyisocyanates of Formula 1 preferably have molecular weights greater than 1800 with each T being a chain of more than 70, preferably more than 100, atoms in length. Especially preferred polyisocyanates have molecular weights in the range of 3,000 to 10,000. It is also preferred that the ratio of

the molecular weight of the polyisocyanate of Formula 1 to the number of isocyanate group containing residues R in the molecule is not less than 800, more preferably not less than 1000 and most preferably not less than 1200. It is desirable that at least two of these contain at least two isocyanate groups per residue with a preferred maximum of four isocyanate groups in any residue. The overall isocyanate equivalent weight of the polyisocyanates of Formula 1 is preferably not less than 500, more preferably not less than 750 and most preferably not less than 850. The isocyanate groups within an isocyanate group containing residue are suitably separated by a chain of not more than 25 atoms.

Examples of polyisocyanates of Formula 1 include products obtained by reacting polymeric polyols with organic polyisocyanates under conditions such that the initially formed urethane-modified polyisocyanates are converted to allophanate-modified polyisocyanates terminating in isocyanate group containing residues of the formula :

$$\begin{array}{l} -O-CO-N-R'-NCO \\ \phantom{-O-CO-}| \\ \phantom{-O-CO-}CO-NH-R'-NCO \end{array}$$

wherein R′ represents a divalent hydrocarbon residue.

Polymeric polyols which may be used in the preparation of the allophanate-modified polyisocyanates preferably have average nominal hydroxyl functionalities of from 2 to 5 and average hydroxyl equivalent weights in the range 750 to 5000. Particularly preferred polymeric polyols have average nominal hydroxyl functionalities of 2 or 3 and average hydroxyl equivalent weights in the range from about 1000 to about 3000. Suitable polyols and methods for their preparation have been fully described in the prior art and, as examples of such polyols, there may be mentioned polyesters, polyesteramides, polythioethers, polycarbonates, polyacetals, polyolefins, polysiloxanes and, especially, polyethers.

Polyether polyols which may be used include products obtained by the polymerisation of a cyclic oxide, for example ethylene oxide, propylene oxide or tetrahydrofuran in the presence, where necessary, of polyfunctional initiators. Suitable initiator compounds contain a plurality of active hydrogen atoms and include water and polyols, for example ethylene glycol, propylene glycol, diethylene glycol, cyclohexane dimethanol, resorcinol, bisphenol A, glycerol, trimethylolpropane, 1,2,6-hexanetriol or pentaerythritol. Mixtures of initiators and/or cyclic oxides may be used.

Especially useful polyether polyols include polyoxypropylene diols and triols and poly(oxyethylene-oxypropylene) diols and triols obtained by the simultaneous or sequential addition of ethylene and propylene oxides to di- or trifunctional initiators as fully described in the prior art. Mixtures of the said diols and triols can be particularly useful. Other particularly useful polyether polyols include polytetramethylene glycols obtained by the polymerisation of tetrahydrofuran.

In preparing the allophanate-modified polyisocyanates, the polyisocyanate and the polyol may be reacted together using conditions that have been fully described in the prior art for the production of urethane prepolymers. Thus, one or more polyisocyanates may be reacted with one or more polyols under substantially anhydrous conditions at temperatures between about 50° and about 110° C, optionally in the presence of catalysts, until the formation of urethane groups by reaction between the isocyanate groups and the hydroxyl groups is substantially complete. Reaction between the urethane groups and the excess of polyisocyanate is then allowed to take place so that at least about 20 %, preferably at least 50 %, and optionally up to 100 % of the initially formed urethane groups are converted to allophanate groups. The conversion of urethane groups to allophanate groups may be assisted by catalysis. Suitable catalysts are known in the polyurethane art and include tin compounds such as dibutyltin dilaurate, and sulphonic acids.

In preparing the allophanate-modified polyisocyanates, the organic polyisocyanate and the polyol are suitably reacted in such proportions that the initial NCO/OH ratio is at least about 2:1, preferably greater than about 5:1. One convenient method of preparing the compositions involves adding the polyol gradually to the total amount of organic polyisocyanates so as to minimise chain extension.

Examples of other polyisocyanates of Formula 1 include products obtained by reacting polymeric polyamines with organic polyisocyanates under conditions such that the initially formed urea-modified polyisocyanates are converted to biuret-modified polyisocyanates terminating in isocyanate group containing residues of the formula :

$$\begin{array}{l} \quad CO-NH-R'-NCO \\ \quad | \\ -N \\ \quad | \\ \quad CO-NH-R'-NCO \end{array}$$

wherein R′ is as defined above.

Polymeric polyamines which may be used in preparing biuret-modified polyisocyanates of Formula 1 typically have amino functionalities from about 2 to about 4, preferably from 2 to 3, and particularly include polyether triamines and, especially, polyether diamines having average amino equivalent weights in the range 750 to 5000, preferably from about 1000 to about 3000. Suitable polyamines include products obtained by the reductive amination of polyether polyols as described, for example, in U.S. Patent 3,654,370 or by the cyanoethylation of polyols followed by hydrogenation. Polyoxypropylene diamines and triamines and mixtures thereof are preferred.

In preparing the biuret-modified polyisocyanates, the organic polyisocyanate and the polyamine may be reacted together using conditions similar to those described above for the preparation of the allophanate-modified polyisocyanates.

Examples of further polyisocyanates of Formula 1 include products obtained by reacting organic polyisocyanates, for example those already mentioned, with imino-functional compounds having molecular weights of at least 1500.

Organic polyisocyanates which may be used in the preparation of the polyisocyanates of Formula 1 include the aliphatic, cycloaliphatic and araliphatic polyisocyanates mentioned above but especially the above-mentioned aromatic polyisocyanates such as MDI.

Aromatic amine-terminated chain extenders which may be used in the preparation of the polyurea elastomers of the invention have been fully described in the prior art relating to isocyanate-based elastomers and include polyamines having molecular weights below 1500, especially below 500, and average primary and/or secondary amino functionalities from about 2 to about 3. Aromatic polyamines useful as chain extenders in preparing the elastomers of the invention particularly include diamines, especially those having molecular weights from about 100 to about 400, preferably between 122 and 300. Suitable diamines have been fully described in the prior art and include 3,5-diethyl-2,4-toluenediamine, 3,5-diethyl-2,6-toluenediamine, DETDA which is a mixture of about 80 % by weight of 3,5-diethyl-2,4-toluenediamine and about 20 % by weight of 3,5-diethyl-2,6-toluenediamine, 1,3,5-triethyl-2,6-diaminobenzene, 2,4-diaminotoluene, 2,6-diaminotoluene, 2,4′-diaminophenylmethane, 4,4′-diaminodiphenylmethane, 3,3′-dimethyl-5,5′diethyl-4,4′-diaminodiphenylmethane, 3,3′,5,5′-tetraisopropyl-4,4′-diaminodiphenylmethane and the like and mixtures thereof.

Amino group-containing isocyanate-reactive amines which may be used in the preparation of the polyurea elastomers of the invention have been fully described in the prior art and include the polymeric polyamines mentioned above in relation to the preparation of the biuret-modified polyisocyanates and aliphatic polyamines having a molecular weight below 1500, preferably below 500 such as ethylene diamine and polyether diamines and triamines having such low molecular weights. Suitable polyether polyamines are available commercially under the registered trade mark "Jeffamine" and include primary amino-terminated polyoxypropylene diamines and triamines. Other polymers which may be used include corresponding secondary amino-terminated polyethers and also amino group-containing polymers in which up to 50 % of the isocyanate-reactive groups are hydroxyl groups. Mixtures of polyamines having different molecular weights could be used as well.

Aldehydes and ketones which may be used in the preparation of the polyurea elastomers of the invention typically have molecular weights below 300, especially below 150 and include acetaldehyde, propionaldehyde, n-butyraldehyde, isobutyraldehyde, heptaldehyde, alpha-methylvaleraldehyde, β-methylvaleraldehyde, caproaldehyde, isocaproaldehyde, cyclohexyl aldehyde, benzaldehyde, furfural, acetone, methyl ethyl ketone, methyl n-propyl ketone, methyl isopropyl ketone, diethyl ketone, benzyl methyl ketone, acetophenone, cyclopentanone, cyclohexanone, methylcyclohexanone and the like. Mixtures of aldehydes and/or ketones may be used if desired.

It is preferred to use an amount of aldehyde and/or ketone equivalent of from about 10 to about 150 % of the total aliphatically bound primary and/or secondary amino groups present in the isocyanate-reactive amines.

The elastomers of the invention may be prepared using conventional techniques. A preferred elastomer is a reaction injection moulded elastomer made by reacting ingredients comprising an organic

polyisocyanate, an aromatic amine-terminated chain extender, an isocyanate-reactive amine having a molecular weight of at least 200 and at least two isocyanate-reactive groups at least 50 % of which are aliphatically bound primary and/or secondary amino groups and an aldehyde or ketone in an amount equivalent to at least 5 % of the aliphatic primary and/or secondary amino group content of the isocyanate-reactive polymer.

In operating a RIM process, the aldehyde or ketone may be supplied to the mixer as a separate stream or it may be present in the polyisocyanate (A) stream or the isocyanate-reactive (B) stream.

Thus, in a further aspect of the invention, there is provided a reaction system for use in making a polyurea elastomer, said system comprising the following components :

(i) an organic polyisocyanate;

(ii) an aromatic amine-terminated chain extender;

(iii) an isocyanate-reactive amine having a molecular weight of at least 200 and at least two isocyanate-reactive groups at least 50 % of which are aliphatically bound primary and/or secondary amino groups, and

(iv) an aldehyde or ketone in an amount equivalent to at least 5 % of the aliphatic amino group content of the isocyanate-reactive amine.

Preferably the isocyanate-reactive amine and the aldehyde or ketone are pre-reacted. Such pre-reaction may be conducted at ambient temperature or at moduratelv elevated temperature. Combining the reactants and mixing is sufficient to obtain the reaction product, no water or excess ketone being removed. Consequently another particularly preferred reaction system is a system for use in making the polyurea elastomer, said system comprising the following components :

(i) an organic polyisocyanate;

(ii) an aromatic amine-terminated chain extender;

(iii) the reaction product of an isocyanate-reactive amine having a molecular weight of at least 200 and at least two isocyanate-reactive groups at least 50 % of which are aliphatically bound primary and/or secondary amino groups, and an aldehyde or ketone in an amount equivalent to at least 5 % of the aliphatic amino group content of the isocyanate-reactive amine.

A still further aspect of the invention provides an isocyanate-reactive component for use in making polyurea elastomers by the RIM process comprising :

(i) an aromatic polyamine chain extender containing from about 2 to about 3 aromatically bound primary and/or secondary amino groups, having an average molecular weight of from about 100 to about 400 and wherein at least 50 mole percent of the species comprising said polyamine are diamines,

(ii) a polyether polyamine having from about 2 to about 4 primary and/or secondary aliphatic amino groups and an average molecular weight of from about 200 to about 10,000 and

(iii) an aldehyde or ketone in an amount equivalent to at least 5 % of the aliphatic amino group content of the polyether polyamine.

Particularly suitable is an isocyanate-reactive component for making polyurea elastomers by the RIM process comprising :

(i) an aromatic polyamine chain extender containing from about 2 to about 3 aromatically bound primary and/or secondary amino groups, having an average molecular weight of from about 100 to about 400 and wherein at least 50 mole percent of the species comprising said polyamine are diamines; and

(ii) the reaction product of a polyether polyamine having from about 2 to about 4 primary and/or secondary amino groups and an average molecular weight of from about 200 to about 10,000 and the reaction product of an aldehyde or ketone in an amount equivalent to at least 5 % of the aliphatic amino group content of the polyether polyamine.

The reaction systems of the present invention can further include additives such as internal mold release agents, catalysts, surfactants, blowing agents, fillers (which may be reinforcements), plasticizers, fire retardants, coupling agents, and the like.

Suitable internal mold release agents include, for example, copper stearate, zinc stearate and a dimethyl polysiloxane with organic acid groups which is commercially available as Dow-Corning Q2-7119 from Dow-Corning Corporation. Other organo-polysiloxanes bearing organic hydroxyl groups (instead of acids) can also be used. A specific example of a very effective, hydroxy functional, polysiloxane internal mold release additive is Goldschmidt-412T (available from Goldschmidt Silicones). The amount of internal mold release agent used can be from about 0.001 to about 5.0 percent by weight of the total reactants (i.e. total polymer).

Catalysts are generally not required during the preparation of polyureas by RIM. Catalysts may, however, be used if desired. Suitable catalysts include, for example, tertiary amines or organotin compounds, such as dibutylin dilaurate, dibutyltin diacetate, diethyltin diacetate, dihexyltin diacetate, di-2-ethylhexyltin oxide, stannous octoate, stannous oleate, or a mixture therof.

Tertiary amine catalysts include trialkylamines which include, for example, triethylamine; heterocyclic amines such as N-alkylmorpholines which include, for example, N-methylmorpholine, N-ethylmorpholine; 2,2′-bis(dimethylamino) diethyl ether; 1,4-dimethylpiperazine, triethylenediamine, and aliphatic polyamines such as N,N, N′,N′-tetramethyl-1,3-butanediamine, or alkanolamines such as N-methyl diethanolamine. The amount of catalyst used will generally be less than about 5 percent by weight of the total reactants, preferably less than 1 %. Combinations of tertiary amine and organotin catalysts are frequently used in the art. Isocyanurate catalysts, such as alkali and/or alkaline earth metal salts of carboxylic acids, may also be added to the formulations of the invention.

Another group of catalysts, which are more specific for the isocyanate-amine reaction, and particularly for the reaction of isocyanates with aliphatic imines, include carboxylic acids and precursors thereof (such as acid anhydrides). Specific examples of carboxylic acid catalysts include oleic acid, 1,12-dodecanedioic acid, isophthalic acid, and the like. These types of catalysts are described in U.S. Patents 4,499,254; 4,487,908; and 4,487,912; and in U.S. 3,789,045 (for the imine-isocyanate rxn.)

It is often preferable to use a catalyst for the imine-isocyanate reaction in the polyurea formulation of this invention. The use of catalysts is, however, not essential. When catalysts are used, it is preferred to incorporate them into the isocyanate stream (A) and hence to isolate them from component B, until after the impingement mixing step. Suitable catalysts, or latent catalysts, which may be incorporated into the isocyanate stream include carboxylic acids. Particularly preferred are fatty acids such as oleic acid. Organic carboxylic acid anhydrides are preferred as latent catalysts for use in the A-stream, for example, cis-1,2-cyclohexanedicarboxylic acid anhydride (1).

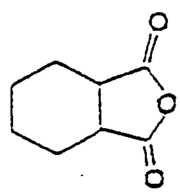

1

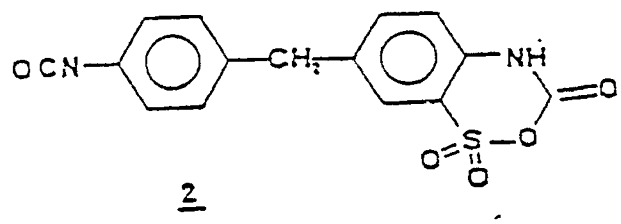

2

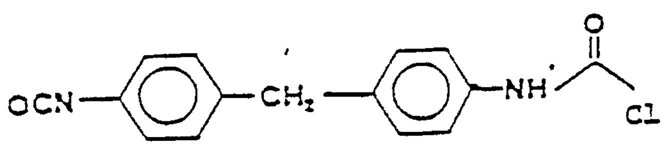

3

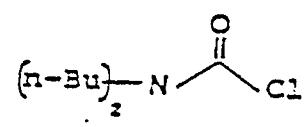

4

Other potential catalysts, or catalyst precursors, for use in the isocyanate include organic acid halides, such as butyryl chloride or benzoyl chloride; sulfonic acid anhydrides such as 2 (formed from the reaction of MDI with sulfur trioxide); Carbamoyl halides such as 3. (formed from reaction of MDI with hydrochloric acid), or 4. The catalysts, and/or catalyst precursors, should be used at concentrations of 5 % (w/w) or less (relative to total polymer weight), preferably 2 % or less, and most preferably less than 1 %.

Catalysts may be useful as processing aids in some formulations.

Suitable surfactants include, for example, sodium salts of castor oil sulfonates; alkali metal or ammonium salts of sulfonic acids such as dodecyl benzene sulfonic acid; and polyether siloxanes having a structure such that a copolymer of ethylene oxide and propylene oxide is attached to a polydimethyl siloxane radical. The amount of surfactant used is less than about 2 percent by weight of the total reactants, preferably less than 1 %.

Suitable blowing agents include, for example, dissolved or dispersed gases such as air, $CO_2$, $N_2O$, or nitrogen, and low boiling halogenated hydrocarbons such as methylene chloride and trichloromonofluoromethane. The amount of blowing agent used is preferably less than about 4 percent by weight of the total reactants. Blowing may also by accomplished by $H_2O$, or precursors thereof, liberated by the reaction of said amines with said ketone and/or aldehyde additives.

Suitable fillers include fiberglass reinforcement fibres, particularly those having lengths of from about

1/16 inch (0.16 cm) to about 1/2 inch (1.27 cm) and milled glass fibres having a length of 1/16 inch (0.16 cm), 1/8 inch (0.32 cm) or 1/4 inch (0.64 cm) and the like. Shorter fibres are always preferred for ease of processing when they are incorporated as part of the "A" or "B" component streams. Other particularly suitable fillers are mica, fumed silica, flake glass, Wollastonite, calcium carbonate, carbon black and the like.

The reaction systems of this invention can be used to make polyureas which are shapable by RIM into useful articles such as automcbile fascias and panels.

RIM machines are well known in the art and include those supplied by Admiral Equipment Corp., Akron, Ohio by Cincinnati Milacron Corp., Cincinnati, Ohio, by Battenfeld Co., Mienerzhagen, West Germany and by Kraus Maffei GmbH, West Germany

The reagents may be blended in a suitable container and agitated at a temperature from about 20° C to about 100° C for a time between five and sixty minutes using a high sheer blade such as a Cowles blade, at a rotational speed of 50 to 2500 rpm. It is preferred to mix and process the ingredients of component (B) at or near ambient (20° C) temperature.

The "A" and "B" Components are placed in separate containers, which are generally equipped with agitators, of the RIM machine wherein the temperature of the "A" Component is 20° C to 125° C. It is preferred that the isocyanate temperature used for processing and mixing be below about 50° C, particularly if the isocyanate contains a catalyst or latent catalyst for the imine-isocyanate reaction. The temperature of the "B" Component can be between about 20° C to about 80° C, but is preferably about 20° C to about 40° C.

The "A" Component and "B" Component are impingement mixed in a forced mix head such as, for example, a Krauss-Maffei mix head. The "A" and "B" Component are pumped to the mix head by a metering pump, for example, a Viking Mark 21A, at a discharge pressure from about 700 to about 5000 psi. It is sometimes necessary to maintain the component streams (A and B) within the pistons (or pumps), mix head, and all conduits connecting these components, at temperatures comparable to those which prevail within the storage tanks. This is often done by heat-tracing and/or by independent recirculation of the components.

The amounts of the "A" and the "B" Components pumped to the mix head is measured as the ratio by weight of the "A" Component to the "B" Component wherein the ratio is from about 9:1 to about 1:9, preferably from 3:1 to 1:3, depending upon the reactants used and the isocyanate index desired. It is preferred that a weight ratio be employed which yields a ratio of isocyanate equivalents in stream (A) to isocyanate-reactive functional groups in stream (B) between 0.70 and 1.90, preferably 0.90 to 1.30, more preferably 0.95 to 1.20. This ratio of equivalents is known as the index and is often expressed as a percentage. The expression "isocyanate-reactive-functional-groups" are defined herein to include imine groups, primary and/or secondary amine groups (aromatic or aliphatic), hydroxyl groups, enamine groups, ketene aminal groups, mercapto(-SH) groups, hemi-aminal groups, aminal groups, and carboxylic acids, said groups being organically bound.

Either or both streams may contain up to 40 % of its weight in solid fillers or reinforcements. In a preferred embodiment, each stream contains at least 70 % by weight of reactive species, not more than 30 % by weight of fillers and/or reinforcements, and not more than 10 % of other optional additives.

The impingement mixed blend of "A"/"B" streams is injected into a mold at a velocity from about 0.3 lb./sec. to about 100 lb./sec. The mold is heated to a temperature from about 20° C to 250° C. Suitable molds are made of metal such as aluminium or steel, although other materials can be used if they can withstand the processing conditions and wear. Usually an external mold release agent is applied before the first molding. These are usually soaps or.waxes which are solid at the mold temperature employed.

A molded polymer article is formed after the impingement mixture is in the mold from about 1 second to about 60 seconds, preferably 5 to 20 seconds. The mold is then opened and the molded product is removed from the mold. The molded product may be post cured by placing the product in an oven having a temperature between 50° C and about 250° C for a time from about one-half hour to about 3 hours. The reaction systems of the invention may also be applied by spraying directly onto a substract; such as a one-sided or "open" mold. Mold filling may be accomplished in this invention in a more facile manner due to the reaction profile of the systems disclosed herein. Often there is an induction period of about 1 to 5 seconds, usually 1 to 3 seconds, during which the reaction between the isocyanate-and the isocyanate-reactive ingredients is flat or retarded. Following this induction period, the reaction accelerates noticeably. This behavior is in sharp contrast to that of the primary aliphatic amines used in the prior art. These amines appear to begin reacting with aromatic isocyanates on contact. These reaction profiles can be visualized by means of the adiabatic temperature-rise technique, which involves dispensing reaction systems (or two or more individual ingredients) through an impingement mixing device into a insulated cup equipped with

thermocouples. The temperature rise due to the reaction is then monitored, at intervals of 0.1 sec. or less, and plotted versus time. Of course, as expected, the induction periods are most clearly evident when the imino compounds are reacted neat (i.e. free of other ingredients) with the aromatic isocyanates. Molded objects can be demolded after a mold residence time of 30 seconds, often 15 seconds or less at a mold temperature less than 350° F, preferably less than 180° F.

The advantage associated with the use of mixtures of aliphatic amines with ketones/aldehydes, relative to the use of the corresponding pre-formed imines or enamines, includes ease of component preparation; better control over reactivity; and the potential for using water (and/or hemi-aminals), liberated by the reaction of said amines with said ketones/aldehydes, for chain-extending and blowing (foaming).

Although not essential to the successful practice of this invention, it is within the scope of the invention to incorporate reactive ingredients into the reaction systems of the invention, in minor amounts, which are different from the types of reactants specifically described herein.

The individual components of the reaction systems are desirably stored and processed under an inert atmosphere such as dry air or nitrogen.

The formulations of the invention are processed at an isocyanate index between 0.70 and 1.90, preferably between 0.95 and 1.20; with the proviso that, if a catalyst for the conversion of isocyanate to isocyanurate groups is present, the index may extend up to about 15.00. Examples of suitable isocyanurate catalysts include alkali metal salts of carboxylic acids, for example, potassium 2-ethylhexoate.

In addition to polyurea RIM, the flow and property advantages and the resulting improvements in processability and the potential for foaming, provided by the reaction systems of the invention make them well suited for use in mat reinforced structure/RIM systems (SRIM). In these systems, a continuous mat of reinforcing fibers is placed in the mold and the reaction system is pumped through and around this mat, thereby providing a composite with mechanical reinforcement. The flow requirements for SRIM can therefore be quite demanding, however. The mats are generally made of glass fibers, but metallic fibers, aramid fibers, carbon fibers, Nylon fibers, combinations of these, and the like may be used. The individual fibers can be quite long relative to reinforcements which can be incorporated via individual component monomer streams, comparable to or longer than the molded part itself when fully extended. The polyurea systems of the invention are well suited to the demanding process requirements of SRIM.

The present invention is illustrated but not limited by the following examples.

Example 1

**Preparation of Prepolymer Composition 1**

The prepolymer composition 1 was prepared as follows. 30 parts by weight of an allophanate modified diphenyl methane diisocyanate based on a 80/20 mixture of 4,4′ - and 2,4′ -diphenyl methane diisocyanate was mixed with 10 parts of a uretonimine modified diphenyl methane diisocyanate having an NCO content of 29.3 %.
The prepolymer composition had an NCO final content of 16.2 %.

Example 2 - Comparative

68.8 parts by weight of Prepolymer Composition 1 was reacted in a RIM process with an isocyanate-reactive composition containing :
- 15.6 parts by weight of Jeffamine D-400 (a polyether diamine of Mw 400), obtained from Texaco Chemical Co.
- 15.6 parts by weight of DETDA
The properties of the resulting elastomer are stated in table 1 herebelow.

Example 3

68.8 parts by weight of Prepolymer Composition 1 was reacted in a RIM process with an isocyanate reactive composition according to the present invention and comprising :
- 15.6 parts by weight of D-400 (a polyether diamine of Mw 400)

- 15.6 parts by weight of DETDA
- 3.83 parts by weight of cyclohexanone.

The isocyanate-reactive composition comprising cyclohexanone was obtained by mixing the ingredients at 40 °C under $N_2$, during about 2 hours. The amount of cyclohexanone used in the above isocyanate-reactive composition was calculated in order to theoretically transform about 50 % of the aliphatically bound amino groups present in the composition. The processing characteristics of the resulting elastomer systems are summarised in Table 1 herebelow.

Table 1

| Observations | Example 2 elastomer | Example 3 elastomer |
|---|---|---|
| Observed reactivity | very fast | slow |
| Observed plaque flow lines | yes | no |
| In-mould injection Pressure/measured rise (bar/sec)* | 15.52 | 9.13 |
| System flowability | very bad | very good |

* pressure measured during injection from in-mould pressure transducers.

Example 4

Two reaction products were prepared by combining and mixing 50 parts by weight of T-5000 (a polyether triamine of Mw 5000) and 3.6 parts by weight of cyclohexanone or 2.3 parts by weight of acetone at room temperature for 1 hour. The amount of cyclohexanone and acetone used was calculated in order to theroretically transform 100 % of the aliphatically bound amino groups present in the T-5000. These reaction products were combined with DETDA and used for preparing elastomers by reaction with a polyisocyanate composition.

## Claims

1. A polyurea elastomer comprising the reaction product of an organic polyisocyanate, an aromatic amine-terminated chain extender, an isocyanate-reactive amine having a molecular weight of at least 200 and at least two isocyanate-reactive groups at least 50 % of which are aliphatically bound primary and/or secondary amino groups and an aldehyde or ketone in an amount equivalent to at least 5 % of the aliphatic amino group content of the isocyanate-reactive amine.

2. A polyurea elastomer according to claim 1 wherein the organic polyisocyanate comprises a polyisocyanate having a molecular weight greater than 600 of the general formula :

$T_m(R)_n$ (1) wherein T represents a chain of more than 30 atoms, m represents an integer of at least 1, R represents an isocyanate group containing residue and n is an integer of at least 2, at least one of the residues represented by R containing at least 2 isocyanate groups separated one from another by a chain of from 2 to 30 atoms and the sum of the residues represented by R constituting less than 50 % of the total molecule on a weight basis.

3. A polyurea elastomer according to claim 2 wherein the polyisocyanate comprises an allophanate-modified polyisocyanate terminating in isocyanate group containing residues of the formula :

```
-O-CO-N-R'-NCO
     |
     CO-NH-R'-NCO
```

wherein R′ represents a divalent hydrocarbon residue.

4. A polyurea elastomer according to claim 2 wherein the polyisocyanate comprises a biuret-modified

polyisocyanate terminating in isocyanate group containing residues of the formula :

$$\begin{array}{l} \quad CO-NH-R'-NCO \\ \quad | \\ -N \qquad\qquad\qquad\qquad , \\ \quad | \\ \quad CO-NH-R'-NCO \end{array}$$

wherein R′ represents a divalent hydrocarbon residue.

5. A polyurea elastomer according to claim 1 wherein the isocyanate-reactive amine comprises a polyether diamine or triamine having an average amino equivalent weight in the range 100 to 5000.

6. A polyurea elastomer according to claim 1 wherein the aldehyde or ketone has a molecular weight below 300.

7. A reaction system for use in making a polyurea elastomer, said system comprising the following components :

(i) an organic polyisocyanate;

(ii) an aromatic amine-terminated chain extender;

(iii) an isocyanate-reactive amine having a molecular weight of at least 200 and at least two isocyanate-reactive groups at least 50 % of which are aliphatically bound primary and/or secondary amino groups, and

(iv) an aldehyde or ketone in an amount equivalent to at least 5 % of the aliphatic amino group content of the isocyanate-reactive amine.

8. A reaction system for use in making a polyurea elastomer, said system comprising the following components :

(i) an organic polyisocyanate;

(ii) an aromatic amine-terminated chain extender;

(iii) the reaction product of an isocyanate-reactive amine having a molecular weight of at least 200 and at least two isocyanate-reactive groups at least 50 % of which are aliphatically bound primary and/or secondary amino groups, and an aldehyde or ketone in an amount equivalent to at least 5 % of the aliphatic amino group content of the isocyanate-reactive amine.

9. An isocyanate-reactive component for use in the reaction system of claim 7 comprising :

(i) an aromatic polyamine chain extender containing from about 2 to about 3 aromatically bound primary and/or secondary amino groups, having an average molecular weight of from about 100 to about 400 and wherein at least 50 mole percent of the species comprising said polyamine are diamines,

(ii) a polyether polyamine having from about 2 to about 4 primary and/or secondary amino groups and an average molecular weight of from about 200 to about 10,000 and

(iii) an aldehyde or ketone in an amount equivalent to at least 5 % of the aliphatic amino group content of the polyether polyamine.

10. An isocyanate-reactive component for use in the reaction system of claim 8 comprising :

(i) an aromatic polyamine chain extender containing from about 2 to about 3 aromatically bound primary and/or secondary amino groups, having an average molecular weight of from about 100 to about 400 and wherein at least 50 mole percent of the species comprising said polyamine are diamines, and

(ii) the reaction product of a polyether polyamine having from about 2 to about 4 primary and/or secondary amino groups and an average molecular weight of from about 200 to about 10,000 and the reaction product of an aldehyde or ketone in an amount equivalent to at least 5 % of the aliphatic amino group content of the polyether polyamine.

European Patent Office

# EUROPEAN SEARCH REPORT

Application Number

EP 90 30 3413

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | EP-A-0 284 253 (I.C.I.) * Claims 2-4,9-12,15-20; page 7, lines 18-50; page 21, table 1 * | 1-10 | C 08 G 18/32<br>C 08 G 18/66<br>C 08 G 18/50<br>C 08 G 18/78 |
| X | EP-A-0 284 912 (BASF) * Claims 1,3-7; page 4, line 57 - page 5, line 2; page 5, lines 52-54; page 7, lines 4-9 * | 1-10 | |
| A | US-A-3 420 800 (G.A. HAGGIS et al.) * Claims 1-3; column 2, lines 14-40; example 2 * | 1-4 | |
| A | FR-A-2 184 735 (W.R. GRACE & CO.) * Claims 1-4; page 1, line 27 - page 2, line 19; page 3, line 22 - page 4, line 21; page 5, line 1 * | 1 | |
| A | FR-A-1 560 492 (GOODYEAR) * Abstract, point 1; page 3, left-hand column, paragraphs 4,5 * | 1 | TECHNICAL FIELDS SEARCHED (Int. Cl.5) |
| A | US-A-4 396 729 (R.J.G. DOMINQUEZ et al.) | | C 08 G |
| A | EP-A-0 093 334 (BASF) | | |

The present search report has been drawn up for all claims

| Place of search | Date of completion of the search | Examiner |
|---|---|---|
| THE HAGUE | 01-08-1990 | VAN PUYMBROECK M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document